# FASCICULE DE BREVET EUROPEEN

(11) **EP 3 308 995 B1**
(45) Date de publication et mention de la délivrance du brevet: **12.05.2021**
(21) Numéro de dépôt: 17195114.8
(22) Date de dépôt: 06.10.2017
(51) Int. Cl.: B60L 5/20

(54) **BANDE D'USURE DE PANTOGRAPHE ET PANTOGRAPHE EQUIPE D'UNE TELLE BANDE D'USURE**
SCHLEIFLEISTE EINES PANTOGRAFEN, UND MIT EINER SOLCHEN SCHLEIFLEISTE AUSGERÜSTETER PANTOGRAF
PANTOGRAPH WEARING STRIP AND PANTOGRAPH EQUIPPED WITH SUCH A WEARING STRIP

(30) Priorité: 17.10.2016 FR 1660052
(43) Date de publication de la demande: 18.04.2018
(73) Titulaire: SNCF Mobilités, 93200 Saint-Denis (FR)
(72) Inventeur: BLANVILLAIN, Gérard, 37270 VERETZ (FR); AUDITEAU, Gérard, 92140 CLAMART (FR); CRUCHET, Jérôme, 72150 SAINT PIERRE DU LOROUER (FR)
(74) Mandataire: Gevers & Orès

(56) Documents cités:
- DE-A1- 4 441 339
- DE-U1- 9 316 425
- FR-A- 961 107
- FR-A- 1 110 518
- FR-A1- 2 838 390
- US-A1- 2013 048 458

## Description

### 1. Domaine technique de l'invention

L'invention concerne les bandes d'usure de pantographes ainsi que les pantographes comprenant ces bandes.

### 2. Arrière-plan technologique

Il est connu qu'un véhicule ferroviaire, tel qu'un train, un métro ou un tramway, comprend une motrice électrique alimentée en courant par l'intermédiaire d'une caténaire qui comprend des supports verticaux soutenant un fil de contact qui s'étend au-dessus des rails de chemin de fer sur lesquels circule le véhicule. Les supports de la caténaire sont espacés de quelques dizaines de mètres et supportent un câble porteur auquel est suspendu le fil de contact par l'intermédiaire de pendules. Un pantographe est en outre installé sur le toit de la motrice électrique du véhicule ferroviaire pour capter le courant électrique circulant dans le fil de contact afin d'alimenter la motrice en énergie électrique au cours de son déplacement sur les rails. Ce pantographe comprend typiquement une partie articulée portée par le toit de la motrice et un archet ou tête de captage destinée à recevoir le courant du fil de contact de la caténaire. La partie de l'archet en contact avec le fil de contact de la caténaire est connue sous les termes de « bande d'usure » ou « bande de frottement » du pantographe.

Lors de la pose d'une caténaire, le fil de contact est désaxé à chaque poteau de manière à éviter que le point de contact et de frottement entre le pantographe et le fil de contact soit toujours le même sous peine d'entraîner un « sciage » ou un vieillissement prématuré de l'archet du pantographe. C'est ce que l'on appelle le zigzag de la caténaire. Aussi, la bande d'usure de l'archet du pantographe voit glisser le fil en fonction de l'avancement du train, mais le voit aussi balayer la bande d'usure de droite à gauche et inversement par le désaxement. Cette bande d'usure doit pouvoir résister à l'usure par frottement. De plus, la bande d'usure est soumise à un échauffement important. Cet échauffement la déstructure et la rend plus facilement usable.

Pendant longtemps, les bandes d'usure ont été constituées d'un matériau en métal tel que le cuivre et/ou l'acier. Dorénavant, les bandes d'usure en métal sont progressivement remplacées par des bandes en carbone. Le carbone présente l'avantage de très peu user le fil de contact grâce à ses propriétés autolubrifiantes.

Cependant, le carbone présente une très forte résistivité par rapport au métal, ce qui engendre un échauffement important par le passage du courant. Cet inconvénient peut-être en partie compensé par une augmentation de la largeur de la bande et donc de la surface de contact avec le fil mais l'augmentation du poids embarqué devient très pénalisant du point de vue dynamique pour le pantographe.

Afin de diminuer la résistivité et donc d'augmenter la conductivité des bandes d'usure en carbone, il a été développé des bandes d'usure comprenant une portion principale en carbone et un ou plusieurs éléments conducteur en cuivre ou en aluminium qui débouchent sur la face captation de courant. Cependant, trop de courant transite alors par l'élément conducteur en aluminium ou en cuivre ce qui entraîne un échauffement de l'élément conducteur au point que ce dernier se ramollisse et fonde en surface.

Toujours afin de diminuer la résistivité, il a également été développé des bandes d'usure en carbone dont les pores du carbone ont été remplis de métal. Ces bandes appelées bandes en carbone imprégnées présentent une amélioration de la conductivité notable mais qui reste néanmoins insuffisante en regard des niveaux nécessaires en présence de forts courants. De plus, la conductivité et la résistance à l'usure de ces bandes n'est pas standardisée. Elles restent très variables selon les gammes de produits et même entre deux produits commercialisés comme présentant les mêmes propriétés. Le document DE 93 16 425 U1 divulgue une bande d'usure de pantographe selon le préambule de la revendication 1.

### 3. Objectifs de l'invention

L'invention vise à pallier au moins certains des inconvénients connus des bandes d'usure de pantographe.

En particulier, l'invention vise à fournir, dans au moins un mode de réalisation de l'invention, une bande d'usure qui présente une meilleure conductivité globale et un échauffement maitrisé.

L'invention vise aussi à fournir, dans au moins un mode de réalisation de l'invention, une bande d'usure qui présente une résistance à l'usure élevée.

L'invention vise aussi à fournir, dans au moins un mode de réalisation de l'invention, des bandes d'usure conçues de manière à posséder des propriétés de résistance à l'usure et de conductivité maitrisées et reproductibles.

L'invention vise aussi à fournir, dans au moins un mode de réalisation de l'invention, une bande d'usure dont les matériaux subissent moins les effets de l'échauffement généré par le passage du courant.

L'invention vise aussi à fournir, dans au moins un mode de réalisation de l'invention, une bande d'usure permettant de passer le maximum de courant avec une répartition du courant maitrisée entre les matériaux constitutifs pour que l'échauffement soit limité à un niveau acceptable par chacun d'entre eux sans atteindre leur seuil de dégradation.

### 4. Exposé de l'invention

Pour ce faire, l'invention concerne une bande d'usure de pantographe selon la revendication 1.

L'insertion dans une bande d'usure en carbone d'un élément conducteur avec une résistivité inférieure à la résistivité du carbone de la portion principale permet d'augmenter la conductivité globale de la bande d'usure. L'élément conducteur sert de pompe à courant pour délester le carbone limitant ainsi son usure causée par un échauffement excessif.

Toutefois, lorsqu'un élément beaucoup plus conducteur que la portion principale de la bande d'usure est inséré dans cette dernière, le courant passe préférentiellement par l'élément fortement conducteur ce qui peut occasionner son échauffement entraînant sa dilation et pouvant aller jusqu'à la fonte de l'élément conducteur à la surface en contact avec le fil de caténaire. En utilisant, un élément conducteur comprenant du carbone, la conductivité globale de l'élément conducteur est diminuée par rapport à un élément conducteur uniquement en métal pur tel que le cuivre ou l'aluminium. Le phénomène d'échauffement de l'élément conducteur est alors limité.

De plus, le comportement du courant au sein de la bande d'usure est plus facile à modéliser. Dans le cas de bandes d'usure en carbone imprégnées de métal selon l'art antérieur, le comportement est majoritairement dépendant des dispersions de fabrication, c'est-à-dire de la résistivités de chacun de ces matériaux, de la porosité du carbone, du degré d'imprégnation, de la répartition des pores du carbone sur l'ensemble de la bande d'usure. Avec le niveau élevé de température atteint les changements de caractéristiques de chaque paramètre ne sont plus maitrisables, notamment lorsqu'elles impactent les performances à l'usure. Dans le cas présent, selon l'invention, l'élément conducteur permet de décharger le carbone d'une partie du courant pour conserver ainsi dans le carbone un niveau de température correspondant à des paramètres stables ne dépassant pas les limites d'inflexion des caractéristiques. L'influence du carbone seul est réduite rendant plus fiable la modélisation avec l'élément conducteur.

Un autre intérêt d'une bande d'usure selon l'invention est que ce type de montage permet l'intégration d'un élément conducteur de petit volume pour une masse résultante faible, tout en permettant de faire transiter dans la bande d'usure le maximum de courant dans des limites de dégradation acceptables pour chacun des éléments la constituant.

Ladite portion principale s'étend, de préférence, sur l'intégralité de la longueur de la bande d'usure.

La portion principale peut être monobloc ou constituée de plusieurs pièces.

Avantageusement, ladite portion principale est en forme de bande présentant une rainure transversale, la rainure permettant l'insertion de l'élément conducteur.

L'élément conducteur s'étend au moins en partie le long de ladite direction longitudinale c'est-à-dire que l'élément conducteur s'étend le long de la direction longitudinale sur au moins une partie de la longueur de la bande d'usure. De préférence, l'élément conducteur s'étend sur les trois quart de la longueur de la bande d'usure, plus préférentiellement sur l'intégralité de la longueur de la bande d'usure.

Ladite portion principale est en carbone. Le carbone de la portion principale est, par exemple, choisi dans le groupe constitué de carbone, de mélange carbone graphite de composites carbone/carbone et de leurs mélanges. Le carbone, le mélange carbone graphite, les composites carbone/carbone et de leurs mélanges peuvent être imprégnés ou non d'un métal.

Selon une variante, ledit au moins un élément conducteur est en un alliage comprenant du carbone. L'élément conducteur peut être en fonte, en cuivre dopé au carbone, en acier, en alliage d'acier, en inox et/ou en un mélange de ces matériaux. La résistivité de tels alliages est inférieure à celle du carbone mais supérieure à celle du cuivre ou de l'aluminium. Elle se situe dans une gamme qui permet d'augmenter la conductivité globale de la bande d'usure tout en limitant le courant transitant dans l'élément conducteur à un niveau qui permet d'éviter le phénomène d'échauffement par concentration.

Contrairement au cuivre dont les caractéristiques mécaniques (dureté, résistance etc.) se dégradent dès 200°C, les matériaux comme le cuivre dopé ou la fonte permettent ainsi le maintien des caractéristiques mécaniques jusqu'à des températures bien plus élevées.

De plus, les métaux purs présentent un fort risque de fluage dû au frottement, aggravé par l'échauffement de surface qui déplace de la matière et dégrade l'intégrité de l'ensemble élément conducteur/portion principale en carbone. Les alliages comprenant du carbone permettent de réduire le phénomène de fluage grâce à une bonne propriété d'usinabilité. Cela est particulièrement le cas de la fonte ainsi que de l'acier et de ses alliages.

Enfin des matériaux tels que le cuivre ont des caractéristiques de frottement très défavorables. Le cuivre dopé avec du carbone améliore l'aptitude à l'usure. L'utilisation de matériau à base d'alliage comprenant du carbone tel que l'acier et plus particulièrement la fonte est encore très favorable du fait de leur taux en carbone.

De préférence, le taux de carbone de l'élément conducteur est supérieur à 0.01% (en pourcentage massique). Ce taux peut varier en fonction du métal de l'alliage. Par exemple, si le métal est du cuivre, il peut être préféré un alliage comprenant entre 3 et 20 % de carbone, plus préférablement entre 10% et 16%, encore plus préférablement autour de 14%. Dans le cas de l'acier, le taux de carbone est habituellement entre 0.001% et 2%, plus préférablement entre 0,01 et 0,1% pour éviter la trempe Le taux de carbone de la fonte est quant à lui entre 2.1% et 6.67%, plus préférablement entre 3 et 5%).

Dans une autre variante, l'élément conducteur comprend au moins une première partie et au moins une deuxième partie, ladite deuxième partie étant en carbone. En effet, il existe principalement deux moyens pour obtenir un élément conducteur étant d'une résistivité globale inférieure à la résistivité du carbone de ladite portion principale et comprenant du carbone dans le but d'augmenter la conductivité globale de la bande d'usure qui le contient tout en limitant le courant y transitant à un niveau qui permet d'éviter le phénomène d'échauffement. La première variante consiste à utiliser un élément conducteur en un alliage métallique comprenant du carbone, le carbone présent dans l'alliage permettant d'augmenter la résistivité du métal jusqu'à un seuil idéal. L'autre variante consiste à fournir un élément conducteur comprenant au moins deux parties : une partie en métal et une partie carbone ainsi la partie en carbone permet d'augmenter la résistivité globale de l'élément conducteur afin qu'elle soit dans la gamme voulue et ce même si la première partie de ce dernier est en métal pur. En ayant un élément conducteur en deux parties, on peut jouer sur les dimensions de chacune des deux parties pour moduler la résistivité globale de l'élément conducteur.

Avantageusement, le matériau de la première partie d'au moins un élément conducteur est du métal. Par exemple, le métal de la première partie d'au moins un élément conducteur est choisi dans le groupe constitué du cuivre, des alliages contenant du cuivre, du fer, des alliages contenant du fer. Dans un mode de réalisation, pour de faibles résistivités, le matériau de la première partie d'au moins un élément conducteur est choisi parmi le cuivre ou ses alliages, plus préférablement parmi les alliages de cuivre avec de l'étain. Encore plus préférablement pour des résistivités intermédiaires, le matériau de la première partie est un alliage comprenant du carbone. La première partie peut par exemple être en fonte, en cuivre dopé au carbone, en acier, en alliage d'acier, en inox et/ou en un mélange de ces matériaux. Ces matériaux présentent une température de fusion plus élevée que le cuivre et permettent une répartition du courant mieux maitrisée qu'avec le cuivre.

Avantageusement, l'élément conducteur débouche sur ladite face de captation de courant. L'élément conducteur est alors directement en contact avec le fil de contact de la caténaire. Selon ce mode de réalisation, la bande d'usure peut être aisément fabriquée en réalisant une rainure dans une bande en carbone telle qu'une bande en carbone ordinaire et en y insérant l'élément conducteur. De préférence, le matériau de l'élément conducteur débouchant sur la face de captation de courant présente une température de fusion élevée permettant de résister à la fusion de la surface en contact avec le fil de contact de la caténaire. De préférence, le matériau de l'élément conducteur débouchant sur la face de captation de courant présente une caractéristique mécanique de frottement permettant d'éviter le fluage en surface sous l'action conjuguée de la température et du frottement du fil de contact de la caténaire.

Selon un mode de réalisation, au moins un élément conducteur s'étend intégralement entre ladite face de captation de courant et ladite face de liaison. Une partie du courant peut alors circuler directement depuis le fil de contact de la caténaire jusqu'à l'archet par un élément conducteur de faible résistance.

Selon ce mode de réalisation, la portion principale peut être constituée de deux pièces, chacune des pièces de la portion principale flanquant l'élément conducteur. Cette configuration facilite la réalisation de la bande d'usure lorsque l'élément conducteur s'étend intégralement entre ladite face de captation de courant et ladite face de liaison.

Selon un mode de réalisation, l'élément conducteur comprend au moins une première partie et cette première partie débouche sur la face de captation de courant. Selon un mode de réalisation, l'élément conducteur comprend au moins une deuxième partie, la deuxième partie débouchant sur la face de liaison. De préférence, le matériau de la première partie d'au moins un élément conducteur présente une température de fusion élevée permettant de résister à la fusion de la surface en contact avec le fil de contact de la caténaire. De préférence, le matériau de la première partie d'au moins un élément conducteur présente une caractéristique mécanique de frottement permettant d'éviter le fluage en surface sous l'action conjuguée de la température et du frottement du fil de contact de la caténaire.

Typiquement, la première partie s'étend le long de ladite direction longitudinale. De même, typiquement, la deuxième partie s'étend le long de ladite direction longitudinale.

De préférence, la première partie et la deuxième partie de l'élément conducteur sont en contact. Ainsi, l'élément conducteur peut comprendre une première partie qui débouche sur ladite face de captation de courant et une deuxième partie en contact avec la première partie qui débouche, quant à elle, sur ladite face de liaison. La première et la deuxième partie de l'élément conducteur s'étendent alors chacune partiellement entre ladite face de captation de courant et ladite face de liaison. L'élément conducteur comprenant les première et deuxième parties peut, quant à lui, s'étendre intégralement entre ladite face de captation de courant et ladite face de liaison.

Il est possible de jouer sur la résistivité de chacune des parties de l'élément conducteur pour obtenir le résultat souhaité.

Selon la variante dans laquelle l'élément conducteur comprend une première et une deuxième partie, le matériau de la deuxième partie d'au moins un élément conducteur est du carbone. La forte résistivité du carbone permet de compenser la faible résistivité du matériau de la première partie de l'élément conducteur mais sa faible hauteur permet néanmoins d'obtenir une résistance plus faible que la première partie de l'élément conducteur. Par exemple, le carbone de la deuxième partie d'un élément conducteur est alors choisi dans le groupe constitué de carbone, de mélange carbone graphite de composites carbone/carbone et de leurs mélanges. Le carbone, le mélange carbone graphite, les composites carbone/carbone et de leurs mélanges peuvent être imprégnés ou non d'un métal. La deuxième partie de l'élément conducteur peut être en matière composite fibrée imprégnée de métal ou frittée par exemple. Le carbone de la deuxième partie peut différer du carbone de la portion principale.

Selon un mode de réalisation, au moins un élément conducteur s'étend partiellement entre ladite face de captation de courant et ladite face de liaison. De préférence, chaque élément conducteur ne comprend alors qu'une matière. L'élément conducteur est alors préférentiellement en un alliage comprenant du carbone.

En plus de jouer sur la résistivité des différents matériaux pour obtenir la répartition du courant souhaité, il est possible de jouer sur les dimensions de l'élément conducteur et de la portion principale. En effet, en plus de la résistivité des différents matériaux qui les composent, les résistances respectives de l'élément conducteur et de la portion principale de la bande d'usure sont également fonction de leurs dimensions, notamment de leur épaisseur et de leur largeur respectives. Typiquement, la résistance de l'élément conducteur et de la portion principale est calculée selon la formule suivante : Ri= (pi x Hi) / S où pi est la résistivité, Hi la hauteur et S est la section. Ainsi, on peut obtenir la résistance souhaitée en se basant sur le matériau et les dimensions des composants de la bande d'usure. Toutefois, les résistances respectives de la portion principale et de l'élément conducteur ne sont pas les seuls éléments pouvant être pris en compte. Il convient également de prendre en considération les capacités d'échauffement des matériaux. En effet, les dimensions de l'élément conducteur sont, préférablement, déterminées de façon à ce que la répartition du courant entre la portion principale et l'élément conducteur respecte les capacités d'échauffement de chacun des matériaux pour qu'ils conservent leurs caractéristiques sans dégradation notable. En pratique, une fois les résistances optimales déterminées, des corrections peuvent être apportées après mesures de températures d'échauffement pour que les matériaux employés restent dans leur limite de température correspondant à la conservation de leurs caractéristiques.

Les longueurs de la bande d'usure, de sa portion principale et son élément conducteur sont déterminées selon la direction longitudinale, les épaisseurs selon une direction perpendiculaire au plan des faces de captation de courant et/ou de liaison à l'archet, les largeurs selon une direction perpendiculaire à la direction longitudinale et à la direction selon laquelle est mesurée l'épaisseur.

Ainsi, la bande d'usure présente une épaisseur déterminée E_{B}. L'épaisseur E_{B} correspond à l'écart entre les faces de captation de courant et de liaison à l'archet. La portion principale s'étendant intégralement entre ladite face de captation de courant et ladite face de liaison, son épaisseur est donc également E_{B}.

La première partie de l'élément conducteur présente une épaisseur déterminée E₁. La deuxième partie de l'élément conducteur présente une épaisseur déterminée E₂. L'élément conducteur présente une épaisseur totale E_{E} égale à la somme de E₁ et E₂. La bande d'usure présente une largeur déterminée 1_{B}. Chaque partie de l'élément conducteur présente une largeur déterminée 1_{Ei}. Lorsque l'élément conducteur comporte plusieurs matériaux qui ne sont pas de même nature que la portion principale en carbone, leur largeur peut être différente pour ajuster les résistances ou améliorer la diffusion de la chaleur. De préférence, les deux parties de l'élément conducteur présentent la même largeur déterminée 1_{E}.

Selon un mode de réalisation, le rapport de chaque épaisseur E₁ᵢ sur l'épaisseur E_{B} est compris entre 50% et 100%. Ce rapport permet une répartition du courant maitrisée entre l'élément conducteur et la portion principale de la bande d'usure.

Selon l'invention, le rapport de la somme des largeurs 1_{Ei} de chaque élément conducteur sur la largeur 1_{B} est compris entre 5% et 25%, de préférence entre 5% et 15%. Ce rapport permet une répartition du courant maitrisée entre l'élément conducteur et la portion principale de bande d'usure tout en maintenant une majorité de ladite face de captation du courant en carbone. Ainsi, l'effet de graissage du fil de caténaire par le carbone est conservé et l'usure de la bande d'usure est limitée.

La bande d'usure peut comprendre un, deux ou trois éléments conducteurs ou plus. De préférence, la bande d'usure comprend un seul élément conducteur.

Selon un mode de réalisation préféré, au moins un élément conducteur est un insert.

L'invention concerne également un pantographe comprenant au moins une bande d'usure selon l'invention.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue de côté schématique d'une bande d'usure montée sur un support collecteur d'archet selon un mode de réalisation de l'invention,
- la figure 2 est une vue schématique d'une face de captation de courant d'une bande d'usure selon un mode de réalisation de l'invention,
- les figures 3 à 8 sont des vues schématiques en coupe d'une bande d'usure montée sur un support collecteur d'archet selon différents modes de réalisation de l'invention.

### 6. Description détaillée d'un mode de réalisation de l'invention

Sur les figures, les échelles et les proportions ne sont pas strictement respectées et ce, à des fins d'illustration et de clarté.

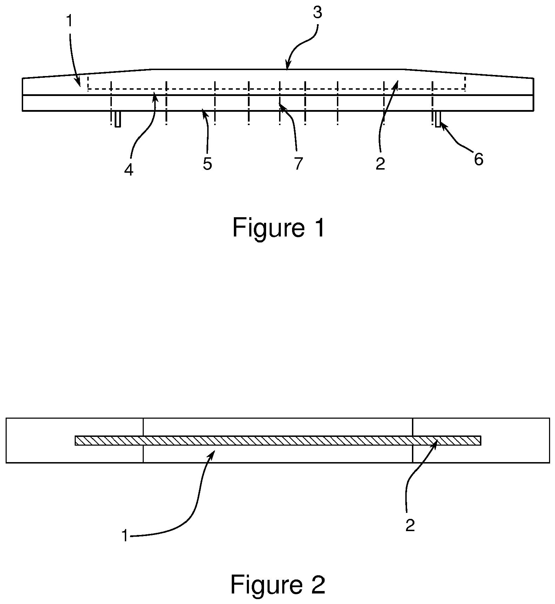

Sur la figure 1, une bande d'usure est représentée montée sur un support collecteur 5 d'archet.

La bande d'usure est de forme allongée. Elle s'étend selon une direction longitudinale. La bande d'usure comprend notamment une face de captation de courant 3 et une face de liaison 4. La face de captation de courant 3 est destinée à être mise en contact avec un fil de caténaire. La face de liaison 4 est destinée à assurer le passage du courant de la bande d'usure vers le support collecteur 5 qui sert de support à la bande d'usure 1 et d'interface avec l'archet le pantographe. Plus précisément, comme représenté à la figure 1, la face de liaison 4 s'interface au support collecteur 5 de l'archet auquel elle est reliée par collage. Le support collecteur 5 comprend des prises de courant 6.

La bande d'usure comprend une portion principale 1 en carbone et un élément conducteur 2 en un matériau dont la résistivité est inférieure à celle du matériau de la portion principale.

La portion principale s'étend intégralement entre la face de captation de courant 3 et la face de liaison 4. La portion principale s'étend également intégralement sur toute la longueur de la bande d'usure.

L'élément conducteur 2 est inséré dans la portion principale 1. L'élément conducteur 2 est relié à cette dernière par le biais de vis 7. Tout comme la bande d'usure et la portion principale qui la compose, l'élément conducteur 2 est de forme allongée. Sur la figure 1, l'élément conducteur est centré par rapport à la bande d'usure. Selon un autre mode de réalisation non représenté, il peut également être décentré. L'élément conducteur s'étend selon la direction longitudinale sur une majeure partie de cette dernière. Selon un mode de réalisation non représenté, l'élément conducteur peut également s'étendre sur toute sa longueur. L'élément conducteur 2 s'étend partiellement entre la face de captation de courant 3 et la face de liaison 4. L'élément conducteur 2 représenté à la figure 1 débouche sur la face de captation de courant 3.

La figure 2 est une vue de dessus de la bande d'usure représentée à la figure 1. Elle représente une vue schématique de la face de captation de courant 3. La face de captation de courant de la bande d'usure est rectangulaire. Selon un autre mode de réalisation non représenté, la bande d'usure peut être non rectangulaire. Elle peut notamment avoir des chanfreins assez longs qui amincissent les extrémités. La face de l'élément conducteur 2 débouchant sur la face de captation de courant 3 s'étend, selon la direction longitudinale, en une bande étroite à l'intérieur de la bande d'usure. Elle est également est rectangulaire. Ainsi, la face de captation de courant comprend une face de la portion principale de la bande d'usure. Cette face de la portion principale de la bande d'usure est rectangulaire. Tout comme, la bande d'usure, la portion principale peut être non rectangulaire, selon un autre mode de réalisation non représenté. Elle présente une rainure par laquelle débouche l'élément conducteur.

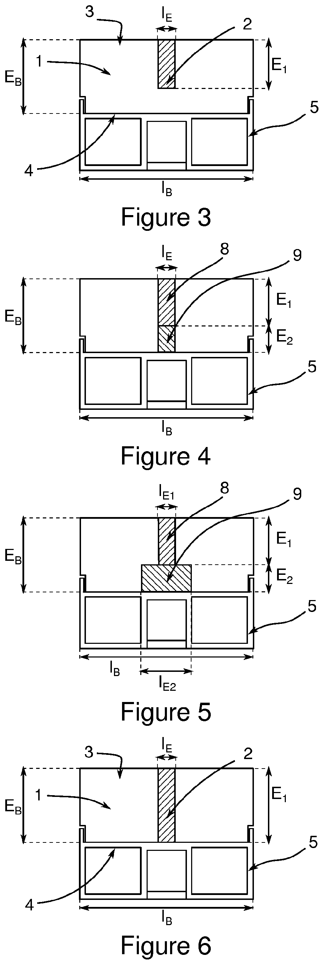

Les figures 3 à 6 représentent des vues schématiques en coupe de différents modes de réalisation de la bande d'usure selon l'invention. Sur ces figures, la bande d'usure comprend une portion principale 1 et un seul élément conducteur 2. L'épaisseur de la bande d'usure y est représentée par E_{B}, sa largeur par 1_{B}. L'épaisseur de la première partie 8 de l'élément conducteur 2 y est représentée par E₁ et celle de la deuxième partie 9, lorsqu'elle est présente, est représentée par E₂.

Sur la figure 3, est représenté un mode de réalisation de l'invention dans lequel la bande d'usure comprend un élément conducteur 2 en un unique matériau et qui s'étend partiellement entre la face de captation de courant 3 et la face de liaison 4 sans venir en contact avec le support 5. L'élément conducteur 2 n'est constitué que d'une première partie en un matériau de plus faible résistivité que la portion principale 1 en carbone et comprenant du carbone, tel qu'un matériau à base de cuivre dopé au carbone, d'acier ou de fonte. Il débouche sur la face de captation de courant 3 mais ne débouche pas sur la face de liaison 4. La partie du courant qui circule depuis la face de captation du courant par l'élément conducteur 2 de faible résistivité doit donc passer par la portion principale en carbone pour atteindre la face de liaison 4. Le passage par cette zone de forte résistivité diminue la densité de courant dans l'élément conducteur 2 et diminue par conséquent son échauffement. On contrôle ainsi mieux la répartition du courant et donc l'échauffement entre la portion principale 1 et l'élément conducteur 2. La faible épaisseur de la portion principale 1 dans la zone avec un élément conducteur correspond à une résistance plus faible que celle sur une zone de pleine épaisseur de la portion principale.

Sur la figure 4, est représenté un mode de réalisation de l'invention dans lequel la bande d'usure comprend un élément conducteur 2 en deux matériaux différents. L'élément conducteur 2 s'étend intégralement entre la face de captation de courant 3 et la face de liaison 4. L'élément conducteur 2 comprend une première partie 8 et une deuxième partie 9. Les première et deuxième parties de l'élément conducteur 2 présentent la même largeur 1_{E}. La première partie 8 est en un matériau de plus faible résistivité que le carbone tel que des alliages à base de cuivre ou de fer ou des alliages contenant du carbone tels que la fonte ou l'acier. La deuxième partie 9 est en un matériau dont la résistivité est supérieure à celle du matériau de la première partie 8, par exemple en carbone de nature différente au carbone de la portion principale 1 ou en matière composite fibrée ou métallique frittée par exemple. La première partie 8 débouche sur la face de captation de courant 3 et est en contact avec une deuxième partie 9 de l'élément conducteur 2. La deuxième partie 9 débouche sur la face de liaison 4. Comme pour le mode de réalisation illustré à la figure 3, le passage par cette zone de résistivité intermédiaire diminue la densité de courant dans l'élément conducteur 8 et diminue par conséquence son échauffement. On contrôle ainsi mieux la répartition du courant et donc l'échauffement entre la portion principale 1 et l'élément conducteur 2.

Comme la figure 4, la figure 5 représente un mode de réalisation de l'invention dans lequel la bande d'usure comprend un élément conducteur 2 en deux matériaux différents. L'élément conducteur 2 s'étend intégralement entre la face de captation de courant 3 et la face de liaison 4. L'élément conducteur 2 comprend une première partie 8 et une deuxième partie 9, la deuxième partie étant en carbone. Toutefois, contrairement au mode de réalisation illustré à la figure 4, sur la figure 5, les première et deuxième parties de l'élément conducteur 2 ne présentent pas la même largeur. La largeur 1_{E2} de la deuxième partie 9 de l'élément conducteur est supérieure à la largeur 1_{E1} de la première partie 8 de l'élément conducteur. Les deux parties 8 et 9 de l'élément conducteur sont dimensionnées pour que la répartition du courant entre la portion principale 1 et l'élément conducteur 2 soit adaptée et maitrisée.

Sur la figure 6, est représenté un mode de réalisation de l'invention dans lequel la bande d'usure comprend un élément conducteur 2 en un unique matériau et qui s'étend intégralement entre la face de captation de courant 3 et la face de liaison 4. L'élément conducteur 2 n'est constitué que d'une partie en un alliage comprenant du carbone. Il débouche à la fois sur la face de captation de courant 3 et sur la face de liaison 4. De préférence, le matériau a une résistivité telle que son effet permet de forcer une partie du courant à passer par la portion principale en carbone. Le matériau est, alors, de préférence, de la fonte ou des alliages frittés à base de carbone, voire des matériaux composites à base de fibre de carbone chargée de métal. Seules la largeur de l'élément conducteur, sa résistivité et son matériau déterminent le niveau de courant de passage. Outre sa résistivité un des critères de choix du matériau est sa capacité à ne pas fluer sur la face de captation sous l'action de l'échauffement conjugué au frottement mécanique du fil de caténaire. Ainsi, le cuivre pur présente une très faible résistivité mais une température de fusion assez basse et flue facilement sous une action mécanique. Le cuivre dopé présente une faible résistivité mais une température de fusion plus haute et flue moins facilement sous une action mécanique. L'acier présente une résistivité plus élevée que le cuivre mais une température de fusion élevée et flue moins facilement sous action mécanique. La fonte présente une résistivité assez élevée et une température de fusion élevée mais ne présente pas de fluage sous action mécanique.

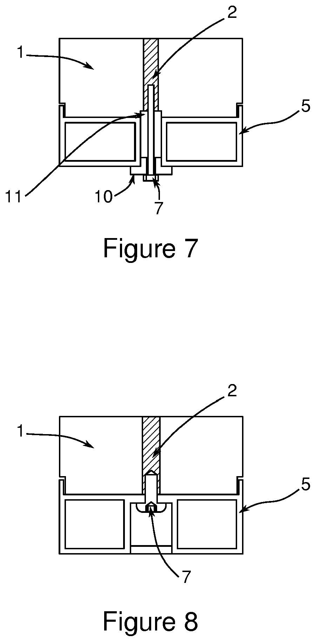

Les figures 7 et 8 représentent des vues schématiques en coupe au droit d'une vis 7 de différents modes de réalisation de la bande d'usure selon l'invention.

La figure 7 représente le même mode de réalisation que celui représenté à la figure 3 dans lequel la bande d'usure comprend une portion principale 1 et un élément conducteur 2. L'élément conducteur 2 est en un unique matériau et s'étend partiellement entre la face de captation de courant 3 et la face de liaison 4. Afin que la vis 7 ne soit pas en contact électrique avec le support collecteur 5 de l'archet ou la portion principale de la bande d'usure et ne court-circuite pas le cheminement du courant, un large trou est réalisé dans le support collecteur 5 et un lamage 11 est réalisé dans la portion principale 1 pour diminuer le risque de court-circuitage entre la vis 7 et le support 5. De plus, la vis 7 est isolée électriquement du support collecteur 5 par un isolant 10.

La figure 8 représente le même mode de réalisation que la figure 5 dans lequel la bande d'usure comprend une portion principale 1 et un élément conducteur 2. L'élément conducteur 2 est en un unique matériau qui s'étend intégralement entre la face de captation de courant 3 et la face de liaison 4. Selon ce mode de réalisation, une partie du courant peut circuler depuis la face de captation de courant 3 jusqu'à la face de liaison 4 uniquement au travers d'un élément conducteur 2 de résistivité intermédiaire comprise entre celle du carbone et celle du cuivre ou de l'acier. Il n'est donc pas nécessaire d'isoler la vis 7 afin qu'elle ne participe pas à la conduction du courant.

### 7. Exemples

Afin d'illustrer de façon simplifiée les propriétés de la bande d'usure selon l'invention, la répartition du courant entre la portion principale et l'élément conducteur de la bande d'usure a été modélisée schématiquement pour des bandes d'usure présentant un élément conducteur en différents matériaux et de différentes dimensions.

Pour ce faire, il a été considéré une surface d'appui du fil de contact correspondant à la largeur de la bande d'usure 1_{B} et à la largeur de l'élément conducteur 1_{E} équivalente au plat d'usure du fil de contact (6 mm par exemple) et un courant de base de 1000A transitant du fil de la caténaire vers le support collecteur de l'archet.

Les valeurs de résistances sont calculées comme suit : Ri= (pi x Hi) / S avec les résistivités des matériaux exprimées en Ohm.m (p).

Les résistivités des différents matériaux sont données dans le tableau 1 ci-dessous :

**Tableau 1**

| | | |
|---|---|---|
| Résistivité d'un élément conducteur en cuivre à 20°C | 1,640E-11 Ohm.mm | 1,640E-02 µOhm.m |
| Résistivité d'un élément conducteur en cuivre à 150°C | 2,470E-11 Ohm.mm | 2,470E-02 µOhm.m |
| | | |
| Résistivité du carbone neuf à 20°C | 8,190E-09 Ohm.mm | 8,190E+00 µOhm.m |
| Résistivité du carbone neuf à 150°C | 9,190E-09 Ohm.mm | 9,190E+00 µOhm.m |
| | | |
| Résistivité d'un élément conducteur en acier à 20°C | 9,87E-11 Ohm.mm | 9,870E-02 µOhm.m |
| Résistivité d'un élément conducteur en inox à 20°C | 5,50E-10 Ohm.mm | 5,500E-01 µOhm.m |
| Résistivité d'un élément conducteur en fonte à 20°C | 1,00 E-09 Ohm.mm | 1,000E+00 µOhm.m |

L'effusibilité des matériaux, l'augmentation de la résistance sous l'échauffement ou l'interaction de contact entre les matériaux n'ont pas été pris en compte pour illustrer les effets de la matière et des dimensions, cela afin de simplifier l'explication.

### 7.1-Elément conducteur en cuivre pur

Sur la base d'un élément conducteur en cuivre pur s'étendant entièrement entre la surface de contact et le support collecteur, la proportion théorique de courant passant par la portion principale et par l'élément conducteur est donnée dans le tableau 2 ci-dessous.

**Tableau 2**

| Caractéristiques de l'élément conducteur | Proportion de courant passant par la portion principale en carbone (1) | Proportion de courant passant par l'élément conducteur (2) |
|---|---|---|
| Elément conducteur en cuivre Ex 1_{E}=6mm et Ex E₁ = 30mm | <15% | > 85% |

On voit clairement que l'élément conducteur va s'échauffer et se ramollir car il laisse transiter beaucoup trop de courant alors que le carbone n'en passe pas assez. La valeur totale n'est pas optimisée.

### 7.2-Element conducteur comprenant une 1^{ère} et une 2^{ème} parties, la 1^{ère} partie étant en cuivre, la 2^{ème} partie étant en carbone

La proportion théorique de courant passant par la portion principale et par l'élément conducteur est donnée dans le tableau 2 ci-dessous.

**Tableau 3**

| Caractéristiques de l'élément conducteur | | | Proportion de courant passant par la portion principale en carbone (1) | Proportion de courant passant par l'élément conducteur (2) |
|---|---|---|---|---|
| Elément conducteur 1_{E}=6mm | 1^{ère} partie | Cuivre | 55% | 45% |
| | | Ex E₁ = 25mm | | |
| | 2^{ème} partie | Carbone | | |
| | | Ex E₂ =5mm | | |
| Elément conducteur 1_{E}=6mm | 1^{ère} partie | Cuivre | 35 % | 65 % |
| | | Ex E₁ = 28mm | | |
| | 2^{ème} partie | Carbone | | |
| | | Ex E₂ =2mm | | |
| Elément conducteur 1_{E}=6mm | 1^{ère} partie | Cuivre | 45% | 55 % |
| | | Ex E₁ =26.8mm | | |
| | 2^{ème} partie | Carbone | | |
| | | Ex E₂ = 3.2mm | | |
| Elément conducteur 1_{E}=10mm | 1^{ère} partie | Cuivre | 40% | 60 % |
| | | Ex E₁ = 25mm | | |
| | 2^{ème} partie | Carbone | | |
| | | Ex E₂ =5mm | | |

L'épaisseur de l'élément conducteur et en particulier de la 2^{ème} partie de ce dernier est donc un facteur très influent. Il en va de même pour la largeur de l'élément conducteur. En modifiant les dimensions de l'élément conducteur, la répartition du courant entre la portion principale et l'élément conducteur peut être modulée pour maitriser un niveau d'échauffement compatible avec les caractéristiques des matériaux considérés.

### 7.3-Element conducteur comprenant une 1^{ère} et une 2^{ème} parties, la 1^{ère} partie étant en acier, la 2^{ème} partie étant en carbone

L'élément conducteur peut également être en acier dont la résistivité est de l'ordre de 9,8 x 10⁻¹¹ Ohm.m c'est-à-dire 6 fois plus résistif que le cuivre (1.6 x 10⁻¹¹ Ohm.m) mais proportionnellement négligeable par rapport à celle du carbone (8,2x10⁻⁹ Ohm.m).

**Tableau 4**

| Caractéristiques de l'élément conducteur | | | Proportion de courant passant par la portion principale en carbone | Proportion de courant passant par l'élément conducteur |
|---|---|---|---|---|
| Elément conducteur 1_{E}=6mm | 1^{ère} partie | Acier | 56% | 44% |
| | | Ex E₁ = 25mm | | |
| | 2^{ème} partie | Carbone | | |
| | | Ex E₂ = 5mm | | |
| Elément conducteur 1_{E}=6mm | 1^{ère} partie | Acier | 45% | 55% |
| | | Ex E₁ = 27mm | | |
| | 2^{ème} partie | Carbone | | |
| | | Ex E₂ =3mm | | |

L'acier qui a une influence notable par rapport au cuivre ne change donc pas fondamentalement l'architecture de la bande d'usure. La répartition du courant y est maitrisable.

### 7.4-Element conducteur comprenant un élément en une seule partie la matière étant de la fonte

L'élément conducteur peut également être en fonte. La fonte présente une résistivité intermédiaire intéressante (1 x10⁻⁹ Ohm.m) qui permet de mieux répartir les courants entre la portion principale et l'élément conducteur sans nécessairement que l'élément conducteur soit en deux parties contrairement à un élément conducteur en cuivre.

**Tableau 5**

| Caractéristiques de l'élément conducteur | | | Proportion de courant passant par la portion principale en carbone | Proportion de courant passant par l'élément conducteur |
|---|---|---|---|---|
| Elément conducteur 1_{E}=6mm | 1^{ère} partie | Fonte | 45% | 55% |
| | | Ex E₁ = 30mm | | |
| | 2^{ème} partie | - | | |
| | | Ex E₂ = 0mm | | |

Il ressort des exemples ci-dessus que la résistivité du matériau est un élément dominant dans la détermination du type et du dimensionnement de l'assemblage (faible ou moyenne résistivité avec un élément conducteur avec une deuxième partie en carbone, moyenne résistivité avec un assemblage avec un élément conducteur traversant).

La présence de l'élément conducteur a pour but majeur de dévier une partie du courant passant par l'élément conducteur pour limiter son échauffement car ce dernier engendre une détérioration de la matière qui se traduit par une usure accélérée. On ne cherche pas nécessairement à obtenir une répartition à 50% car les niveaux d'échauffement acceptables induits par le passage du courant ne sont pas les mêmes dans la portion principale ou l'élément conducteur (de l'ordre de 250° pour la portion principale et plus de 800° pour l'élément conducteur). Par conséquent, après un dimensionnement par le calcul des résistances, c'est le niveau de température induite et l'interaction entre matériaux qui détermineront les dimensions de chacun des éléments en fonction de la résistance à l'échauffement et des limites de dégradation.

L'intérêt de ces types de montage est de permettre l'intégration d'un insert du plus petit volume pour une masse résultante faible, tout en permettant de faire transiter dans le montage d'ensemble le maximum de courant dans les limites de dégradations acceptables par chacun des matériaux.

### 7.5 Caractéristiques physiques des matériaux de l'élément conducteur

Parmi les caractéristiques physiques autres que la résistivité principalement, les matériaux ou famille de matériaux abordés possèdent des caractéristiques physiques qui présentent des avantages ou des inconvénients dans l'utilisation telle que présentée. Les facteurs les plus influents sont la capacité à maintenir les caractéristiques mécaniques sous l'effet de la température, l'usinabilité et à maintenir un bon coefficient de frottement.

### Echauffement

Un des problèmes majeurs réside dans la dégradation thermique de l'élément conducteur sous l'effet du courant à l'interface avec la caténaire. C'est particulièrement flagrant avec le cuivre qui perd ses caractéristiques mécaniques (dureté, résistance...) dès 200°C.

Une des solutions innovante consiste à doper le cuivre, avec des matériaux d'apport de carbone, permettant le maintien des caractéristiques jusqu'à des températures bien plus élevées (voir tableau 6). D'autres pistes sont également intéressantes, par exemple l'utilisation de fonte qui présente des températures admissibles plus élevées.

### Usinabilité

Comme autre inconvénient des matériaux métalliques au contact frottant avec un autre matériau, le fluage dû au frottement, aggravé par l'échauffement de surface déplace de la matière et dégrade l'assemblage élément conducteur / portion principal en carbone. L'apport de carbone permet de réduire le phénomène grâce à une bonne propriété d'usinabilité. L'emploi de l'acier et ses alliages réduit ainsi le phénomène grâce à un seuil de perte de caractéristiques élevé, au-delà de 1000°C. La fonte est particulièrement intéressante dans sa qualité d'usinabilité.

### Frottement

Les matériaux usuels présentent des caractéristiques de frottement bien connues. Dans les matières présentées en exemple, on voit clairement que le cuivre, face au cuivre de la caténaire, est très défavorable. Un cuivre dopé avec du carbone améliore l'aptitude à l'usure.

D'un autre côté, l'usage de matériau à base de fer est plus favorable, les aciers doux par exemple, et plus particulièrement la fonte grâce à son taux de carbone plus élevé.

**Tableau 6**

| Matériau | Résistivité | Taux de carbone | Température de ramollissement sous échauffement | Aptitude au frottement / cuivre caténaire | Niveau d'intérêt |
|---|---|---|---|---|---|
| Carbone imprégné Cu | 8.19 E-9 | 80% | < 500° (déstructuration et sublimation) 200° (cuivre d'imprégnation) | 9 / 10 | Partie principale |
| Fonte | 1 E-9 | 4% | > 1000° | 6 / 10 | **** |
| Acier | 0.0987 E-9 | 1% | > 1000° | 4 / 10 | ** |
| Cuivre dopé | 0.015 E-9 | 14% | 800° | 3 / 10 | *** |
| Cuivre pur | 0.0164 E-9 | 0% | 200° | 1 / 10 | * |

On voit assez clairement que pour que les matériaux assurent une performance acceptable dans l'usage présenté, le cuivre pur n'est pas l'idéal.

La présence de carbone dans les matériaux métalliques usuels est donc un élément important dans le bon comportement de l'insert, à partir du moment où il permet :
- de maintenir les caractéristiques mécaniques des matériaux de base à haute température (800°C/1000°C),
- de maintenir une bonne usinabilité du matériau de base,
- d'améliorer le coefficient de frottement du matériau de base.

## Revendications

1. Bande d'usure de pantographe s'étendant le long d'une direction longitudinale et comprenant une face, dite face de captation de courant (3), destinée à être mise en contact avec un fil de contact d'une caténaire, et une face, dite face de liaison (4), destinée à être montée sur un archet d'un pantographe, la bande d'usure comprenant:
- une portion en carbone, dite portion principale (1), s'étendant le long de ladite direction longitudinale, intégralement entre ladite face de captation de courant et ladite face de liaison,
- au moins un élément conducteur (2) inséré dans ladite portion principale qui s'étend au moins en partie le long de ladite direction longitudinale, au moins partiellement entre ladite face de captation de courant (3) et ladite face de liaison (4), ledit élément conducteur (2) étant d'une résistivité inférieure à la résistivité du carbone de ladite portion principale (1) et comprenant du carbone, **caractérisée en ce que** la somme des largeurs de chaque élément conducteur est comprise entre 5% et 25% de la largeur de la bande d'usure, les largeurs étant déterminées selon une direction perpendiculaire à la direction longitudinale et à la direction perpendiculaire au plan des faces de captation de courant et/ou de liaison à l'archet.

2. Bande d'usure selon la revendication 1, **caractérisée en ce qu'**au moins un élément conducteur (2) s'étend intégralement entre ladite face de captation de courant (3) et ladite face de liaison (4).

3. Bande d'usure selon la revendication 1 ou la revendication 2, **caractérisée en ce que** :
- la portion principale (1) est monobloc,
OU
- la portion principale (1) est constituée de deux pièces, chacune des pièces de la portion principale (1) flanquant l'élément conducteur (2), l'élément conducteur (2) s'étendant intégralement entre la face de captation de courant (3) et la face de liaison (4).

4. Bande d'usure selon l'une des revendications 1 à 3, **caractérisée en ce que** ledit au moins un élément conducteur est en un alliage comprenant du carbone, de préférence en fonte, en cuivre dopé au carbone, en acier, en alliage d'acier, en inox et/ou en un mélange de ces matériaux.

5. Bande d'usure selon l'une des revendications 1 à 3, **caractérisée en ce que** l'élément conducteur (2) comprend au moins une première partie et au moins une deuxième partie, ladite deuxième partie (9) étant en carbone.

6. Bande d'usure selon la revendication 5, **caractérisée en ce que** ladite première partie (8) débouche sur ladite face de captation de courant (3) et ladite deuxième partie (9) débouche sur ladite face de liaison (4).

7. Bande d'usure selon la revendication 5 ou 6, **caractérisée en ce que** le matériau de la première partie (8) d'au moins un élément conducteur (2) est du métal, de préférence un alliage comprenant du carbone.

8. Bande d'usure selon l'une des revendications 1 à 7, **caractérisée en ce qu'**elle comprend un seul élément conducteur (2).

9. Pantographe comprenant au moins une bande d'usure selon l'une des revendications 1 à 8.

## Patentansprüche

1. Schleifleiste für einen Stromabnehmer, die sich entlang einer Längsrichtung erstreckt und eine als Stromaufnahmeseite (3) bezeichnete Seite, die dazu bestimmt ist, mit einem Kontaktdraht einer Oberleitung in Kontakt gebracht zu werden, und eine als Verbindungsseite (4) bezeichnete Seite umfasst, die dazu bestimmt ist, an einem Bügel eines Stromabnehmers angebracht zu werden, wobei die Schleifleiste umfasst:
- einen als Hauptabschnitt (1) bezeichneten Abschnitt aus Kohlenstoff, der sich vollständig zwischen der Stromaufnahmeseite und der Verbindungsseite entlang der Längsrichtung erstreckt,
- mindestens ein in den Hauptabschnitt eingefügtes leitendes Element (2), das sich mindestens teilweise zwischen der Stromaufnahmeseite (3) und der Verbindungsseite (4) mindestens zum Teil entlang der Längsrichtung erstreckt, wobei das leitende Element (2) einen spezifischen Widerstand aufweist, der kleiner ist als der spezifische Widerstand des Kohlenstoffs des Hauptabschnitts (1), und Kohlenstoff umfasst, **dadurch gekennzeichnet, dass** die Summe der Breiten jedes leitenden Elements zwischen 5 % und 25 % der Breite der Schleifleiste beträgt, wobei die Breiten in einer Richtung bestimmt werden, die zur Längsrichtung und zu der Richtung senkrecht steht, die zur Ebene der Stromaufnahme- und/oder der Verbindungsseite zum Bügel senkrecht steht.

2. Schleifleiste nach Anspruch 1, **dadurch gekennzeichnet, dass** sich mindestens ein leitendes Element (2) vollständig zwischen der Stromaufnahmeseite (3) und der Verbindungsseite (4) erstreckt.

3. Schleifleiste nach Anspruch 1 oder Anspruch 2, **dadurch gekennzeichnet, dass**:
- der Hauptabschnitt (1) einstückig ist,
ODER
- der Hauptabschnitt (1) aus zwei Teilen besteht, wobei jedes der Teile des Hauptabschnitts (1) das leitende Element (2) flankiert, wobei sich das leitende Element (2) vollständig zwischen der Stromaufnahmeseite (3) und der Verbindungsseite (4) erstreckt.

4. Schleifleiste nach einem der Ansprüche 1 bis 3, **dadurch gekennzeichnet, dass** das mindestens eine leitende Element aus einer Legierung, die Kohlenstoff umfasst, vorzugsweise aus Gusseisen, aus mit Kohlenstoff dotiertem Kupfer, aus Stahl, aus Stahllegierung, aus rostfreiem Stahl und/oder aus einem Gemisch dieser Materialien besteht.

5. Schleifleiste nach einem der Ansprüche 1 bis 3, **dadurch gekennzeichnet, dass** das leitende Element (2) mindestens ein erstes Teilstück und mindestens ein zweites Teilstück umfasst, wobei das zweite Teilstück (9) aus Kohlenstoff besteht.

6. Schleifleiste nach Anspruch 5, **dadurch gekennzeichnet, dass** das erste Teilstück (8) an der Stromaufnahmeseite (3) mündet und das zweite Teilstück (9) an der Verbindungsseite (4) mündet.

7. Schleifleiste nach Anspruch 5 oder 6, **dadurch gekennzeichnet, dass** es sich beim Material des ersten Teilstücks (8) mindestens eines leitenden Elements (2) um Metall, vorzugsweise eine Legierung handelt, die Kohlenstoff umfasst.

8. Schleifleiste nach einem der Ansprüche 1 bis 7, **dadurch gekennzeichnet, dass** sie ein einziges leitendes Element (2) umfasst.

9. Stromabnehmer, der mindestens eine Schleifleiste nach einem der Ansprüche 1 bis 8 umfasst.

## Claims

1. Pantograph wearing strip extending along a longitudinal direction and comprising a face, called current collector face (3), intended to be put into contact with a contact wire of a catenary, and a face, called connecting face (4), intended to be mounted on a bow of a pantograph, the wearing strip comprising:
- a carbon portion, called main portion (1), extending along said longitudinal direction, integrally between said current collector face and said connecting face,
- at least one conductive element (2) inserted in said main portion which extends at least partially along said longitudinal direction, at least partially between said current collector face (3) and said connecting face (4), said conductive element (2) being of a resistivity less than the resistivity of the carbon of said main portion (1) and comprising carbon, **characterised in that** the sum of the widths of each conductive element is comprised between 5% and 25% of the width of the wearing strip, the widths being determined along a direction perpendicular to the longitudinal direction and to the direction perpendicular to the plane of the current collector and/or connecting faces to the bow.

2. Wearing strip according to claim 1, **characterised in that** at least one conductive element (2) extends integrally between said current collector face (3) and said connecting face (4).

3. Wearing strip according to claim 1 or 2, **characterised in that**:
- the main portion (1) is one-piece,
OR
- the main portion (1) is constituted of two parts, each of the parts of the main portion (1) flanking the conductive element (2), the conductive element (2) extending integrally between the current collector face (3) and the connecting face (4).

4. Wearing strip according to one of claims 1 to 3, **characterised in that** said at least one conductive element is made of an alloy comprising carbon, preferably cast-iron, carbon-doped copper, steel, steel alloy, stainless steel and/or a mixture of these materials.

5. Wearing strip according to one of claims 1 to 3, **characterised in that** the conductive element (2) comprises at least one first portion and at least one second portion, said second portion (9) being made of carbon.

6. Wearing strip according to claim 5, **characterised in that** said first portion (8) leads to said current collector face (3) and said second portion (9) leads to said connecting face (4).

7. Wearing strip according to claim 5 or 6, **characterised in that** the material of the first portion (8) of at least one conductive element (2) is metal, preferably an alloy comprising carbon.

8. Wearing strip according to one of claims 1 to 7, **characterised in that** it comprises one single conductive element (2).

9. Pantograph comprising at least one wearing strip according to one of claims 1 to 8.
